# EUROPÄISCHE PATENTSCHRIFT

(11) **EP 0 795 588 B1**
(45) Veröffentlichungstag und Bekanntmachung des Hinweises auf die Patenterteilung: **18.07.2001**
(21) Anmeldenummer: 97101286.9
(22) Anmeldetag: 28.01.1997
(51) Int. Cl.: C09D 1/10, D21H 19/38, D21H 21/52

(54) **Streichfarbe**
Coating
Revêtement

(30) Priorität: 13.03.1996 DE 19609868
(43) Veröffentlichungstag der Anmeldung: 17.09.1997
(73) Patentinhaber: OMYA AG, 4665 Oftringen (CH)
(72) Erfinder: Schachenmann, Max, 4665 Oftringen (CH); Strauch, Dieter, 4800 Zofingen (CH)
(74) Vertreter: Reinhard - Skuhra - Weise & Partner

(56) Entgegenhaltungen:
- EP-A- 0 027 997
- WO-A-92/09746
- FR-A- 2 440 436
- FR-A- 2 468 688

## Beschreibung

Die vorliegende Erfindung betrifft eine Streichfarbe, enthaltend Wasser, carbonathaltige Pigmente, insbesondere CaCO₃-Pigment sowie übliche Bindemittel und Additive.

Pigmente sind im Anwendungsmedium praktisch unlösliche, anorganische oder organische, bunte oder nichtbunte Farbmittel. Viele anorganische Pigmente fungieren auch als Füllstoffe oder umgekehrt. Die Pigmente werden insbesondere verwendet zum Färben von Lacken und Anstrichmitteln, für die Einfärbung von Kunststoffen, Papier, Textilien, Zement, Beton, Keramik, Glas und Emaille, Kosmetika, Lebensmitteln sowie für Druckfarben in der graphischen Industrie und als Künstlerfarben.

Insbesondere in der Papier-Industrie werden Produkte gefordert, die einen hohen Glanz aufweisen. Die DE-PS 27 33 722 betrifft ein Verfahren zur kontinuierlichen Herstellung von Calciumsulfoaluminat-Pigment mit einer Teilchengröße von 0,1 bis 2,0 µm durch Umsetzung von Calciumhydroxid mit Aluminiumsulfat zur Papierbeschichtung. Dieses Verfahren bewirkt in Druckpapieren u.a. einen hohen Glanz selbst bei mäßiger Kalanderbedingungen aufgrund des hohen Hydratationsgrads von Satinweiß, wobei Papier mit hoher Opazität durch Ausbildung einer dicken Überzugsschicht erhalten wird.

Die DE-PS 1 938 162 betrifft ein Verfahren zum Beschichten von Papier oder dergleichen, wobei ein Beschichtungsmaterial aus einer in einem flüssigen Medium enthaltenen polymeren Zusammensetzung auf eine Bahn aufgetragen wird. Mit diesem Verfahren soll die direkte Herstellung einer leichten Beschichtung hoher Glätte und Opazität ermöglicht werden, ohne daß anschließende Glättungsarbeiten erforderlich sind.

Aus der DE 36 17 169 ist es jedoch bekannt, daß carbonathaltige Pigmente, insbesondere CaCO₃-Pigmente als einzige Pigmente in Papieren beachtliche technische Vorteile aufweisen. Die vorliegende Erfindung betrifft deshalb eine Streichfarbe, die als Pigmente ausschließlich carbonathaltige Pigmente enthält.

Es ist weiterhin bekannt, daß carbonathaltige Pigmente mit hoher spezifischer Oberfläche vorteilhaft als Pigmente für Glanzpapier eingesetzt werden können. So ist aus der DE 44 00 566 ein Verfahren zur Herstellung von natürlichen und/oder synthetischen Carbonaten, insbesondere Calciumcarbonaten bekannt, die eine spezifische Oberfläche von über 20 m²/g nach BET/N₂, vorzugsweise 20 - 50 m²/g nach BET/N₂ aufweisen. Diese carbonathaltigen Pigmente werden durch Naßvermahlung im Kreislauf durchgeführt, d. h. durch Rückführung des die Mühle verlassenden Produkts in die Mühle so oft, bis das Endprodukt mit der gewünschten spezifischen Oberfläche erreicht ist.

Es ist bereits seit langem bekannt, daß der Glanz von Papieren von der Korngrößenverteilung des enthaltenen Pigments abhängig ist.

Pigmente müssen im allgemeinen vermahlen werden, um sie für die verschiedenen Anwendungsmöglichkeiten geeignet zu machen. Dies sei im folgenden am Beispiel einer Papierbeschichtungsmasse näher erläutert. Beschichtete Papiere sind mit einer Masse beschichtet, die im wesentlichen einen Klebstoff bzw. Bindemittel und ein Pigment in Form eines mineralischen Füllstoffs enthält. Eine Beschreibung der Bestandteile von Papierbeschichtungsmaterialien und ihre Anwendung ist im Buch von James P. Casey "Pulp and Paper Chemistry and Technology, Kapitel XIX. BD. III (1961) gegeben. Das verwendete Bindemittel kann z. B. aus Stärke, Kasein oder einem synthetischen Latex bestehen. Das speziell verwendete Bindemittel hängt beispielsweise vom angewendeten Druckverfahren ab, so erfordert Offset-Lithographie ein Bindemittel, das wasserunlöslich ist.

Eine Gruppe von Calciumcarbonatpigmenten besteht z.B. aus natürlich vorkommendem Material. Hierzu gehören Kalkstein, Marmor und Kreide.

Die normalerweise im Handel erhältlichen Naturschlämmkreidepigmente neigen dazu, Papierüberzüge von geringerem Glanz zu bilden. Dies ist darauf zurückzuführen, daß sie durchweg nicht mehr als 35 Gew.% an Teilchen enthalten, die kleiner als 2 µm sind.

Hiervon ausgehend wird in der DE-AS 16 96 190 eine Papierbeschichtungsmasse für glänzende Streichpapiere vorgeschlagen, die dadurch gekennzeichnet ist, daß die Naturkreide durch Vermahlen mit Sand oder einer Strahlmühle oder durch Klassifizierung nach Teilchengröße so weit aufbereitet ist, daß sie wenigstens 60 Gew.% an Teilchen enthält, die kleiner als 2 µm eines entsprechenden sphärischen Durchmessers sind, und nicht mehr als 5 Gew.% an Teilchen enthält, die größer als 10 µm eines entsprechenden sphärischen Durchmessers sind, und nicht mehr als 0,05 Gew.% an Teilchen, die größer als 53 µm sind.

Ganz allgemein kann man sagen, daß die Teilchengröße einen erheblichen Einfluß auf die Eigenschaften des den Füllstoff enthaltenden Produkts, z. B. auf den Glanz eines gestrichenen Papieres hat. In der DE 28 08 425 sind 9 Literaturstellen angegeben, aus denen hervorgeht, daß der Glanz um so höher ist, je größer im Pigment der Anteil an feinsten Teilchen ist. Dies bedeutet, daß man seinerzeit davon ausging, daß es bezüglich des Glanzes kein Optimum beim Gehalt an feinsten Teilchen des Pigmentes gibt, denn man war der Meinung, daß der Glanz um so höher sei, je feiner die Teilchen des Pigments sind.

Gemäß der Lehre der DE 28 08 425 wurde damals erkannt, daß diese Lehre überholt ist, denn gemäß der DE 28 08 425 konnte ein noch höherer Glanz erzielt werden, wenn die ultrafeinen Teilchen, d.h. die Teilchen < 0,2 µm völlig oder weitestgehend vermieden würden. Dies bedeutete, daß doch ein Optimum bezüglich des Glanzes gegeben ist, nämlich hinsichtlich des Wertes für die Teilchen < 0,2 µm.

Schließlich sei zum Stande der Technik darauf hingewiesen, daß der Glanz eines Streichpapiers um so höher ist, je höher der Feststoffgehalt der Streichfarbe ist.

Eine Aufgabe der vorliegenden Erfindung ist es, eine Streichfarbe der eingangs erwähnten Gattung zu schaffen, die bei der Anwendung in Papieren zu einem höheren Glanz gegenüber Produkten nach dem Stande der Technik führt.

Diese Aufgabe wird erfindungsgemäß dadurch gelöst, daß die Streichfarbe aus 28 - 51 Gew.% Wasser, 43 - 64 Gew.% carbonathaltigem Pigment, welches ohne den Zusatz von Dispergier- oder Netzmittel naßvermahlen wurde, mit einer Korngrößenverteilung von
100 % < 2 µm
94 - 100 % < 1 µm
75 - 94 % < 0,5 µm
31 - 59 % < 0,2 µm
einem mittleren statistischen Teilchendurchmesser (D₅₀) von 0,18 - 0,28 µm und einer spezifischen Oberfläche von 19 - 26 m²/g sowie 6 - 8 Gew.% üblichen Bindemitteln und Additiven besteht.

Wie aus den folgenden Vergleichsbeispielen ersichtlich ist, ist es außerordentich überraschend, daß die erfindungsgemäße Streichfarbe zu derart hervorragenden Glanzwerten führt, obwohl der Feststoffgehalt der Streichfarbe lediglich 43 - 64 Gew.% beträgt, also vergleichsweise sehr niedrig liegt. Wie vorstehend ausgeführt, hätte man erwarten müssen, daß der Glanz wegen des geringen Feststoffgehalts wesentlich schlechter ist.

Weiterhin ist im Zusammenhang mit dem vorstehend geschilderten Stand der Technik festzustellen, daß das carbonathaltige Pigment nicht weniger als 31 - 59 % an Teilchen < 0,2 µm eines äquivalenten sphärischen Durchmessers aufweisen muß. Im Gegensatz zur Lehre der DE 28 08 425 wurde erfindungsgemäß gefunden, daß ein Glanzoptimum nicht etwa bei der völligen oder weitgehenden Vermeidung von Teilchen < 0,2 µm erreicht werden kann, sondern daß in unerwarteter Weise ein hervoragender Glanz bei einem Gehalt von 31 bis 59 % an Teilchen kleiner 0,2 µm erreicht wird.

In der Kombination der erfindungsgemäßen Merkmale spielt auch die spezifische Oberfläche eine wesentliche Rolle, die von 19 bis 26 m²/g betragen muß.

Vorzugsweise besteht die Streichfarbe aus 29 - 49 Gew.% Wasser und 45 - 63 Gew.% carbonathaltigem Pigment und 6 - 8 % üblichen Bindemitteln und Additiven, insbesondere aus 31 - 48 Gew.% Wasser und 45 - 62 Gew.% carbonathaltigem Pigment und 7 % üblichen Bindemitteln und Additiven.

Vorzugsweise weist das carbonathaltige Pigment eine Korngrößenverteilung von
100 % < 2 µm
95 - 99 % < 1 µm
80 - 91 % < 0,5 µm
35 - 51 % < 0,2 µm, vorzugsweise von 38 - 51 % < 0,2 µm
auf.

Insbesondere weist das carbonathaltige Pigment eine Korngrößenverteilung von
100 % < 2 µm
96 - 98 % < 1 µm
77 - 89 % < 0,5 µm
40 - 47 % < 0,2 µm
auf.

Die carbonathaltigen Pigmente weisen vorzugsweise einen mittleren statistischen Teilchendurchmesser (D₅₀) von 0,20 - 0,28 µm, insbesondere von 0,22 - 0,27 µm auf.

Vorzugsweise weisen die carbonathaltigen Pigmente eine spezifische Oberfläche von 20 bis 25 m²/g, insbesondere von 21 bis 24 m²/g auf.

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5100 der Firma Micromeritics, Instrument Company, Norcross, Georgia, U.S.A., bestimmt. Dieses Gerät ist dem Durchschnittsfachmann bekannt und wird weltweit zur Bestimmung der Feinheit von Füllstoffen und Pigmenten verwendet.

Die spezifische Oberfläche wurde nach BET entsprechend DIN 66 131 gemessen. Die bis zur Gewichtskonstanz bei 105°C vorgetrocknete Probe wurde im Thermostaten bei 250°C unter Stickstoffspülung während 1 Stunde aufgeheizt. Die Messung erfolgte mit Stickstoff (N₂) als Meßgas unter Kühlung mit flüssigem Stickstoff.

Unter "Feststoffkonzentration" wird der Gehalt an atro (= absolut trocken) carbonathaltigem Pigment, insbesondere Calciumcarbonat in der wäßrigen Aufschlämmung verstanden, ausgedrückt in Gewichtsprozent.

Die erfindungsgemäß zu verwendenden üblichen Bindemittel und Additive sind jedem Durchschnittsfachmann bekannt, und es bedarf keiner erfinderischen Bemühungen, um geeignete Bindemittel und Additive einzusetzen. Nur beispielsweise können insbesondere folgende Bindemittel und Additive verwendet werden:

Bindemittel (Acrylester, Acrylnitril, Styrol, Mischpolymerisat) Verdicker (Harnstoff-Formaldehyd-Kondensationsprodukt) Natürliche CO-Binder (Carboxylmethylzellulose)

### Herstellung der erfindungsgemäßen Streichfarbe:

Die erfindungsgemäße Streichfarbe wird erfindungsgemäß dadurch hergestellt, daß das carbonathaltige Pigment durch Naßvermahlung, ohne den Zusatz von Dispergier- oder Netzmittel bei einer Feststoffkonzentration von 30 - 20, vorzugsweise von 26 - 21 Gew.% in einer Rührwerkskugelmühle solange durch Kreislaufvermahlung aufgemahlen wird, bis eine Endfeinheit von 100 % an Teilchen < 2 µm, 94 - 100 an Teilchen < 1 µm, 75 - 94 % an Teilchen < 0,5 µm und 31 - 59 % an Teilchen < 0,2 µm, ein mittlerer statistischer Teilchendurchmesser (D₅₀) von 0,18 - 0,28 und eine spezifische Oberfläche von 19 - 26 m²/g erreicht ist.

Die auf diese Weise erhaltene carbonathaltige Pigment-Aufschlämmung wird anschließend auf einen Feststoffgehalt von 63 Gew.% - 65 Gew.% aufkonzentriert und in an sich bekannter Weise mit einem üblichen, im Handel erhältlichen Dispergiermittel redispergiert. Schließlich wird die Streichfarbe durch Zugabe von üblichen, im Handel erhältlichen Bindemitteln, von Wasser und von üblichen, im Handel erhältlichen Additiven in einer jedem Fachmann bekannten Weise so gemischt, daß die im Patentanspruch 1 angegebenen Parameter erfüllt sind.

### Ausführungsbeispiel:

Natürliches Calciumcarbonat wurde in an sich bekannter Weise trocken vorgemahlen. Die Feinvermahlung erfolgte naß, ohne den Zusatz von Dispergier- oder Netzmittel, in einer Rührwerkskugelmühle bei einer Feststoffkonzentration von 26 - 21 Gew.%. Die Mahlung erfolgte so lange im Kreislauf, bis die gewünschte Endfeinheit mittels Sedimentationsanalyse ermittelt werden konnte.

Parameter bei Naßvermahlung, ohne Dispergiermittel:
- Rührwerkskugelmühle:: Marke Drais 12 Liter Inhalt
- Rührscheiben-Drehzahl:: 10 m/s
- Feststoffgehalt:: 26 -21 %, Senkung durch Wasserzugabe von 26 % auf 21 %
- Aufgabenmenge:: CaCO₃-Marmor 9 kg atro
- Fahrweise:: Kreislauf (Rührgefäß-Pumpe-Mühle-Rührgefäß)

Die Messung der spezifischen Oberfläche erfolgte anschließend nach der BET Methode.

VP 4 = Das CaCO₃-Erfindungsprodukt wurde durch Naßvermahlung, ohne den Zusatz von Dispergier- oder Netzmittel, in einer Rührwerkskugelmühle mittels Kreislauffahrweise bei einem Feststoffgehalt von 21 Gew.% hergestellt. Mittels einer Filterpresse und Mikrowelle-Nachtrocknung wurde das Produkt auf ca. 65 % Feststoffgehalt aufkonzentriert. Der gewonnene Filterkuchen wurde mit einem anionischen Dispergiermittel (Acrylsäure, Maleinsäureanhydrid-Copolymer) mit einem Anteil von 1,0 % atro bei 62 % unter einem Dissolver redispergiert.

Das dadurch hergestellte Erfindungsprodukt VP 4 weist eine EndFeinheit von 100 % < 2 µm, 96 % < 1 µm, 83 % < 0,5 µm und 41 % an Teilchen < 0,2 µm auf, besitzt eine spezifische Oberfläche von 22,7 m²/g und weist einen mittleren statistischen Teilchendurchmesser (D₅₀) von 0,24 µm auf.

### Herstellung von Vergleichsprodukten:

Für die Prüfung in einer Papier-Streichfarbe für Rollenoffset wurden Vergleichs- und Handelprodukte mit möglichst ähnlicher spezifischer Oberfläche hergestellt und mitgeprüft.

VP 1 = ein nat. Calciumcarbonat als Spitzenprodukt aus dem heutigen Stand der Technik mit einer Feinheit von 91 % < 1 um und 64 % < 0,5 µm sowie einer spezifischen Oberfläche von 21,8 m²/g. Dieses Produkt wird durch Naßmahlung in einer Rührwerkskugelmühle, mit dem Zusatz von anionischem Dispergiermittel (Acrylsäure, Maleinsäureanhydrid-Copolymer), in Kaskade-Fahrweise bei hohem Feststoffgehalt von 75 Gew.% hergestellt.

VP 2 = Ein Kaolin-Handels produkt der Spitzenklasse mit 98 % < 1 um und 90 % < 0,5 µm und einer spezifischen Oberfläche von 21 m²/g. Dieses sprühgetrocknete Produkt kann direkt der Streichfarben-Rezeptur zugemischt werden.

VP 3 = Ein durch Naß-Klassierung hergestelltes CaCO₃-Versuchsprodukt mit einer Feinheit von 98 % < 1 µm, 85 % < 0,5 µm sowie einer spezifischen Oberfläche von 22,5 m²/g. Dieses Produkt weist fast die selben Feinheitsmerkmale wie VP 4 auf. Dieses Versuchsprodukt wurde, aus einem CaCO₃-Standard Slurry mit 90 % < 2 µm mit anionischem Dispergiermittel versetzt, hergestellt, indem man den Feinstanteil durch Naß-Klassierung abgetrennt hat. Dieser Feinanteil wurde anschließend mittels Filterpresse auf einen Feststoffgehalt von 63 Gew.% aufkonzentriert und eingesetzt. Diesem Produkt wurden zur Redispergierung 0,8 Gew.% des selbigen anionischen Dispergiermittels (Acrylsäure, Maleinsäureanhydrid-Copolymer) zugesetzt.

### Beispiel 1:

### Streichfarbenrezeptur für Rollenoffset:

### (atro = absolut trocken)

| | |
|---|---|
| Bindemittel (Acrylester, Styrol, Acylnitril) | 6,8 % atro |
| Verdicker (Harnstoff-Formaldehyd-Kondensationsprodukt) | 0,24 % atro |
| Natürlicher CO-Binder (Carboxylmethylzellulose) | 0,5 % atro |
| Streichpigment z.B. CaCO₃ | 48,5 % atro |
| Der Feststoffgehalt wurde eingestellt auf | 56 % |

Streichbedienungen: Labor-Streichmaschine Marke Eigenbau
- Streichroh-Papier:: 36-37 g/m², holzfrei
- Strichauftrag:: OS = 7,7 g/m², SS = 8 g/m²
- Streichaggregat:: Blade-Coater Arbeitsgeschwindigkeit 30 m/min
- Trocknung:: Infrarot
- Satinage:: Labor Zwei-Walzenkalander Kleinewefers 90 daN/cm Liniendruck bei 90° C Walzentemperatur

OS = Oberseite
SS = Siebseite

### Prüfbedingungen:

- Glanz-Labor:: T 480 nach Tappi 75° Ein- und Abstrahlwinkel
- Druckglanz:: Die Glanzmessung erfolgt ebenfalls im Tappi 75° Ein- und Abstrahlwinkel auf der Vollfläche des Labor-Andruck.
- Opazität:: nach DIN 53 146

| Physikalische Kennzahlen der Produkte: | | | | |
|---|---|---|---|---|
| Versuchsprodukte | VP 1 | VP 2 | VP 3 | VP 4 |
| Feinheitsmerkmale | | | | |
| Anteil kleiner als 2 µm | 99 | 100 | 100 | 100 |
| Anteil kleiner als 1 µm | 91 | 98 | 98 | 97 |
| Anteil kleiner als 0,5 µm | 64 | 90 | 85 | 83 |
| Anteil kleiner als 0,2 µm | 34 | 47 | 43 | 41 |
| mittl. Teilchengröße, D₅₀, µm | 0,40 | 0,21 | 0,25 | 0,24 |
| Spez. Oberfläche, BET, m²/g | 21,8 | 21,0 | 22,5 | 22,7 |

| Prüfresultate: | | | | |
|---|---|---|---|---|
| Papierglanz | 39 | 55 | 51 | 65 |
| Druckglanz | 55 | 58 | 57 | 61 |
| Papier-Weisse, R-457 | 73,7 | 72,9 | 74,5 | 74,4 |
| Opazität bei 56 g/m² | 85,1 | 88,1 | 86,4 | 86,8 |

Das in diesem Beispiel 1 verwendete erfindungsgemäße Calciumcarbonat VP 4 liefert die mit Abstand besten Glanz- und Druckglanzwerte im Vergleich zu den mitgeprüften Vergleichsprodukten. Obwohl vom Durchschnittsfachmann für das Versuchsprodukt VP 2 Kaolin-Handelsprodukt mit seiner Plättchenstruktur an sich der höchste Glanz erwartet würde, erreichte es tatsächlich die guten Glanzwerte von VP 4 jedoch nicht. Das geprüfte VP 3 mit praktisch gleicher Korngrößenverteilungskurve, wie VP 4 und einer spezifischen Oberfläche von 22,5 m²/g liegt überraschenderweise schlechter, was wegen der fast gleichen Produktparameter nur darauf zurückgeführt werden kann, daß bei der Herstellung von VP 3 mit Dispergier- und Netzmittel gearbeit wurde, was zu einer Belegung der Oberfläche der Teilchen und damit zu schlechterem Glanz führt. Es ist aber immer noch wesentlich besser als das Vergleichsprodukt VP 1.

Völlig unerwartet für den Durchschnittsfachmann sind die großen Glanzunterschiede zwischen den geprüften Versuchsprodukten, obwohl alle Versuchsprodukte fast die gleiche spezifische Oberfläche aufweisen, nämlich von 21,0 m²/g bis 22,7 m²/g.

Die erfindungsgemäßen Produkte führen überraschenderweise zu höheren Glanzwerten als Produkte nach dem Stande der Technik. Die erfindungsgemäße Streichfarbe erreicht trotz des niedrigen Feststoffgehalts deutlich höhere Glanz- und Druckglanzwerte gegenüber dem Stande der Technik.

Die erfindungsgemäße Streichfarbe kann vorteilhaft für Streichpapiere, insbesondere für hochwertige Glanzpapiere und Kartonbeschichtungen verwendet werden.

## Patentansprüche

1. Streichfarbe, enthaltend Wasser, carbonathaltige Pigmente, insbesondere CaCO₃-Pigment sowie übliche Bindemittel und Additive,
dadurch gekennzeichnet, daß sie aus
28 - 51 Gew.% Wasser,
43 - 64 Gew.% carbonathaltigem Pigment, welches ohne den Zusatz von Dispergier- oder Netzmittel naßvermahlen wurde, mit einer Korngrößenverteilung von
100 % < 2 µm
94 - 100 % < 1 µm
75 - 94 % < 0,5 µm
31 - 59 % < 0,2 µm,
einem mittleren statistischen Teilchendurchmesser (D₅₀) von 0,18 - 0,28 um und einer spezifischen Oberfläche von 19 - 26 m²/g (nach BET; N₂; DIN 66131) sowie
6 - 8 Gew.% üblichen, im Handel erhältlichen Bindemitteln und üblichen, im Handel erhältlichen Additiven besteht.

2. Streichfarbe nach Anspruch 1,
dadurch gekennzeichnet,
daß sie aus 29 - 49 Gew.% Wasser und 45 - 63 Gew.% carbonathaltigem Pigment und 6 - 8 % üblichen Bindemitteln und Additiven, insbesondere aus 31 - 48 Gew.% Wasser und 45 - 62 Gew.% carbonathaltigem Pigment und 7 % üblichen Bindemitteln und Additiven besteht.

3. Streichfarbe nach Anspruch 1 oder 2,
dadurch gekennzeichnet,
daß das carbonathaltige Pigment eine Korngrößenverteilung von
100 % < 2 µm
95 - 99 % < 1 µm
80 - 91 % < 0,5 µm
35 - 51 % < 0,2 µm, vorzugsweise von 38 - 51 % < 0,2 µm,
aufweist.

4. Streichfarbe nach einem oder mehreren der vorhergehenden Ansprüche,
dadurch gekennzeichnet,
daß das carbonathaltige Pigment eine Korngrößenverteilung von
100 % < 2 µm
96 - 98 % < 1 um
77 - 89 % < 0,5 µm
40 - 47 % < 0,2 µm
aufweist.

5. Streichfarbe nach einem oder mehreren der vorhergehenden Ansprüche,
dadurch gekennzeichnet,
daß die carbonathaltigen Pigmente einen mittleren statistischen Teilchendurchmesser (D₅₀) von 0,20 - 0,28 µm, insbesondere von 0,22 - 0,27 µm aufweisen.

6. Streichfarbe nach einem oder mehreren der vorhergehenden Ansprüche,
dadurch gekennzeichnet,
daß die carbonathaltigen Pigmente eine spezifische Oberfläche von 20 bis 25 m²/g, insbesondere von 21 bis 24 m²/g aufweisen.

7. Verfahren zur Herstellung der Streichfarbe nach einem oder mehreren der vorhergehenden Ansprüche,
gekennzeichnet durch folgende Verfahrensschritte:
a) das carbonathaltige Pigment wird durch Naßvermahlung, ohne den Zusatz von Dispergier- oder Netzmittel bei einer Feststoffkonzentration von 30 - 20, vorzugsweise von 26 - 21 Gew.% in einer Rührwerkskugelmühle solange durch Kreislaufvermahlung aufgemahlen, bis eine Endfeinheit von 100 % an Teilchen < 2 µm, 94 - 100 an Teilchen < 1 µm, 75 - 94 % an Teilchen < 0,5 µm und 31 - 59 % an Teilchen < 0,2 µm, ein mittlerer statistischer Teilchendurchmesser (D₅₀) von 0,18 - 0,28 und eine spezifische Oberfläche von 19 - 26 m²/g erreicht ist,
b) die auf diese Weise erhaltene carbonathaltige Pigment-Aufschlämmung wird anschließend auf einen Feststoffgehalt von 63 Gew.% - 65 Gew.% aufkonzentriert und in an sich bekannter Weise mit einem üblichen, im Handel erhältlichen Dispergiermittel redispergiert,
c) schließlich wird die Streichfarbe durch Zusatz von üblichen, im Handel erhältlichen Bindemitteln, von Wasser und von üblichen, im Handel erhältlichen Additiven in einer jedem Fachmann bekannten Weise so gemischt, daß die im Patentanspruch 1 angegebenen Parameter erfüllt sind.

8. Verwendung der Streichfarbe nach einem oder mehreren der Ansprüche 1 bis 6 für Streichpapiere, insbesondere für hochwertige Glanzpapiere, und für Kartonbeschichtungen.

## Claims

1. A coating color containing water, carbonate-containing pigments, in particular CaCO₃-pigment as well as usual binders and additives, characterized in that said coating color consists of:
28 - 51 % by weight of water,
43 - 64 % by weight of carbonate-containing pigment, which was wet milled without the addition of dispersing or wetting agents, with a particle size distribution of:
100 % < 2 µm
94 - 100 % < 1 µm
75 - 94 % < 0.5 µm
31 - 59 %< 0.2 µm
with a mean statistical particle diameter (D₅₀) of 0,18 - 0,28 µm and with a specific surface area of 19 - 26 m²/g (as determined by BET; N₂; DIN 66131); and
6 - 8 % by weight of usual, commercially available binding agents and usual, commercially available additives.

2. The coating color according to claim 1 characterized in that said coating color consists of:
29 - 49 % by weight of water, and
45 - 63 % by weight of carbonate-containing pigment, and
6 - 8 % by weight of usual binding agents and additives, in particular of:
31 - 48 % by weight of water, and
45 - 62 % by weight of carbonate-containing pigment, and
7 % by weight of usual binding agents and additives.

3. The coating color according to claim 1 or 2, characterized in that said carbonate-containing pigment has a particle size distribution of:
100 % < 2 µm
95 - 99 % <1 µm
80-91 % <0.5 µm
35 - 51 % < 0.2 µm, preferably 38 - 51 % < 0.2 µm.

4. The coating color according to one or more of the preceding claims, characterized in that said carbonate-containing pigment has a particle size distribution of:
100 % < 2 µm
96 - 98 % < 1 µm
77 - 89 % < 0.5 µm
40 - 47 % < 0.2 µm.

5. The coating color according to one or more of the preceding claims, characterized in that said carbonate-containing pigment possesses a mean statistical particle diameter (D₅₀) of 0.20 - 0.28 µm, in particular of 0.22 - 0.27 µm.

6. The coating color according to one or more of the preceding claims, characterized in that said carbonate-containing pigment has a specific surface area of 20 to 25 m²/g, in particular of 21 to 24 m²/g.

7. A method for the production of a coating color according to one or more of the preceding claims, characterized by the following process steps:
a) without the addition of dispersing or wetting agents, wet milling the carbonate-containing pigment at a solids concentration of 20 - 30 wt.-%, preferably 26 - 21 wt.-%, in an agitating ball mill with recirculation for a time sufficient to obtain a final fineness of:
100 % of particles < 2 µm
94 - 100 % of particles < 1 µm
75 - 94 % of particles < 0.5 µm
31 - 59 % of particles < 0.2 µm
a mean statistical particle diameter (D₅₀) of 0.18- 0.28 µm and a specific surface area of 19 - 26 m²/g;
b) then concentrating the carbonate pigment suspension thus obtained to a solids content of 63 - 65 % by weight and re-dispersing in a manner known per se with a usual, commercially available dispersant; and
c) mixing the coating color by adding usual, commercially available binding agents, water and usual, commercially available additives in a manner known to a skilled person so that the parameters given in claim 1 are fulfilled.

8. Use of the coating color according to one or more of the claims 1 to 6 for coated papers, in particular for high quality gloss papers and for board coatings.

## Revendications

1. Revêtement de couchage contenant de l'eau, des pigments carbonatés, en particulier un pigment de CaCO₃, ainsi que des agents liants et des additifs usuels,
caractérisé en ce qu'il est constitué :
de 28-51% en poids d'eau,
de 43-64% en poids de pigment carbonaté, qui a été broyé à l'état humide sans addition d'un agent dispersant ou d'un agent mouillant, ledit pigment
ayant une granulométrie comme suit :
100% < 2 µm
94 - 100% < 1 µm
75 - 94% < 0,5 µm
31- 59% < 0,2 µm
un diamètre particulaire statistique moyen (D₅₀) de 0,18-0,28 µm, et une surface spécifique de 19-26 m²/g (selon la méthode BET; N₂; DIN 66131), ainsi que
de 6 - 8% en poids d'agents liants et d'additifs usuels commerciaux.

2. Revêtement de couchage selon la revendication 1,
caractérisé en ce qu'il est constitué de 29-49% en poids d'eau et de 45-63% en poids d'un pigment carbonaté et de 6-8% d'agents liants et d'additifs usuels, en particulier de 31-48% en poids d'eau et de 45-62% en poids de pigment carbonaté ainsi que de 7% d'agents liants et d'additifs usuels.

3. Revêtement de couchage selon la revendication 2,
caractérisé en ce que le pigment carbonaté a une granulométrie particulaire comme suit :
100% < 2 µm
95 - 99% < 1 µm
80-91%<0,5 µm
35 - 51% < 0,2 µm, de préférence 38 - 51% < 0,2 µm.

4. Revêtement de couchage selon une ou plusieurs des revendications précédentes,
caractérisé en ce que le pigment carbonaté a une granulométrie particulaire comme suit :
100% < 2 µm
96 - 98% < 1 µm
77 - 89% < 0,5 µm
40 - 47% < 0,2 µm.

5. Revêtement de couchage selon une ou plusieurs des revendications précédentes,
caractérisé en ce que les pigments carbonatés présentent un diamètre particulaire statistique moyen (D₅₀) de 0,20-0,28 µm, notamment de 0,22-0,27 µm.

6. Revêtement de couchage selon une ou plusieurs des revendications précédentes,
caractérisé en ce que les pigments carbonatés présentent une surface spécifique de 20 à 25 m²/g, en particulier de 21 à 24 m²/g.

7. Procédé de fabrication d'un revêtement de couchage selon une ou plusieurs des revendications précédentes, caractérisé par les étapes de procédé suivantes :
a) le pigment carbonaté est broyé par broyage humide, sans l'addition d'agents dispersants ou d'agents mouillants à une concentration de solides de 30-20%, de préférence de 26-21% en poids dans un broyeur-agitateur à boulets assez longtemps par broyage en circuit pour atteindre une finesse finale de 100% de de taille inférieure à 2 µm, de 94-100% de particules de taille inférieure à 1 µm, de 75-94% de particules de taille inférieure à 0,5 µm et de 31-59% de particules de taille inférieure à 0,2 µm, un diamètre particulaire statistique moyen (D₅₀) de 0,18-0,28 et une surface spécifique de 19-26 m²/g,
b) la suspension de pigment carbonaté ainsi obtenue est ensuite concentrée jusqu'à une teneur en solides de 63-65% en poids et est re-dispersée de manière connue en soi avec un agent dispersant usuel du commerce,
c) enfin, le revêtement de couchage est mélangé par addition d'agents liants usuels du commerce, d'eau et d'additifs usuels du commerce de manière connue de l'homme de l'art de façon à ce que les paramètres indiqués dans la revendication 1 soient satisfaits.

8. Utilisation du revêtement de couchage selon une ou plusieurs des revendications 1 à 6 pour papiers couchés, en particulier pour papiers brillants de grande valeur et pour des revêtements de cartons.
